# EUROPEAN PATENT SPECIFICATION

(11) **EP 1 327 339 B1**
(45) Date of publication and mention of the grant of the patent: **15.08.2007**
(21) Application number: 01977016.3
(22) Date of filing: 18.10.2001
(51) Int. Cl.: H04L 12/56, H04L 12/64, H04L 12/66, H04L 29/06

(54) **ARRANGEMENT FOR PACKET BASED CALL-RELATED HIGH AVAILABILITY SOLUTIONS**
ANORDNUNG FÜR AUF PAKETEN BASIERENDE VERBINDUNGSBEZOGENE HOCHVERFÜGBARKEITSLÖSUNGEN
SYSTEME POUR SOLUTIONS D'APPELS PAR PAQUETS A HAUTE DISPONIBILITE

(30) Priority: 19.10.2000 NO 20005257
(43) Date of publication of application: 16.07.2003
(73) Proprietor: TELEFONAKTIEBOLAGET LM ERICSSON (publ), 164 83 Stockholm (SE)
(72) Inventor: KLILAND, Kevin, N-0651 Oslo (NO); SORBOTTEN, Geir, N-1341 Slependen (NO)
(74) Representative: Sjöberg, Mats Hakan
(86) International application number: PCT/SE2001/002282
(87) International publication number: WO 2002/033914

(56) References cited:
- EP-A2- 0 967 764
- WO-A1-00/48368
- WO-A1-97/02691
- US-A- 5 781 534

## Description

### Field of the invention

The present invention is related to large-scale packet based communication for providing high availability and redundant network implementations. Only the term redundant is used in the text.

### Background of the invention

For exchange of information and communication between nodes in different layers in a packet switched systems, it is of great importance that redundancy is achieved for availability purposes. If a preferred node is out of function, there preferably has to be a substitute at present. Thus, relevant address information to alternative nodes always has to be updated and presented for the system so that alternative routes may be utilized. The problem is that this may be both time and resource consuming.

Address information of horizontal nodes in network implementations typically has to be configured per node initially, or at least per layer, or more advanced lookup protocols might be utilized. The run-time information exchange between horizontal nodes might be performed in two ways:
- by the use of a more or less advanced peer to peer real time protocol that ensures that the peer contains the same data. The disadvantage is that this solution is load consuming during normal execution/traffic, besides that the implementation of the solution is complex,
- by the use of writing and reading to shared resources. The peers write and read typically to a file system or a database. The actual context switching in this case is more time consuming due to the fact that all the data has to be read from the shared resources before the peer actually is up and running.

For vertical exchange of information, initial configuration data concerning addresses of nodes within the next layer typically has to be configured per node, per layer or by the use of more advanced lookup protocols. Traditionally, each node contains all the information on the availability of the next layer by itself see for example US.A.-5781534. Then each node has to contain data concerning from which node a message was sent, and to which node the message is to be passed. Persistent data storage must then be present for each node, or each layer, which might be rather expensive. Advanced protocols for updating the different layers on the status of the nodes of the adjacent layers might be introduced instead, but this really would be complex and load consuming.

The present invention relates to vertical exchange of information.

### Summary of the invention

It is an object of the present invention to provide a method which eliminates the drawbacks described above. This method is characterized by the features defined in the claims enclosed.

More specifically, the object of the present invention is to provide a method for high availability and redundant network implementations by introducing a new mechanism for exchanging vertical information (e.g. address information) between nodes in run-time.

The main advantages of the present invention are short implementation time and little processing overhead during normal execution. In addition, few shared resources has to be maintained.

### Brief description of the drawings

In order to make the invention more readily understandable, the discussion that follows will refer to the accompanying drawings.

Fig. 1 is a block diagram showing an example of a large scale, redundant deployed multimedia packet based network and its possible connections.

Fig. 2 shows a block diagram illustrating an example of a normal user registration in the network of fig. 1.

Fig. 3 shows a block diagram illustrating an example of a confirmation of the registration of fig. 2.

Fig. 4 shows a block diagram illustrating an example of a call set-up in the network of fig. 1 using a redundant node.

### Detailed description

In the following, the present invention will be described with reference to the figures mentioned above. First, a general description will be disclosed, and thereafter an example of a user registration, confirmation and a call set-up according to the present invention.

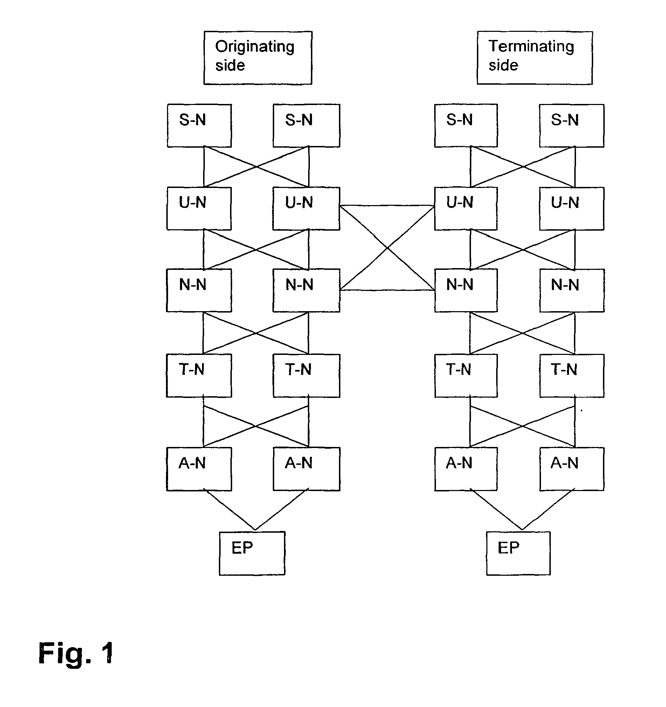

Fig. 1 shows an example of a large scale, redundant deployed multimedia packet based network and the possible connections. The abbreviations used in the figure are defined as follows:
- EP, Endpoint
- A-N, Access Node. Typically located on enterprise segments. Handling access specific services e.g. as conversion between different protocols or formats. Also typically handling enterprise firewall traversal
- N-N, Network Node. Typically located on ISP segment, handling routing, network QoS (Quality of Service) etc.
- T-N, Transit Node. Compulsory in order to traverse ISP' s firewalls
- U-N, User Node. Handling user specific events, such as user registration etc.
- S-N, Service Node. Handling service specific events.

The present patent application discloses a new method for exchange of vertical information in run-time.

Only the layers that hold registrations, and that issue messages towards the endpoint, contain the vertical redundancy information for the downward (from S-N towards EP) direction. This is typically the user/service node. Thus, redundancy in the downward vertical direction will be on a per-registration basis. For the upward (from EP towards S-N) direction, each node will maintain the different alternative addresses on the next layer.

Typically, the vertical nodes will be informed about the other layers in connection with user registration. The available downward redundancy paths for a registration will be communicated to the node holding the registration in the registration message. The upward redundancy will be partially configured, partly communicated in registration confirmation messages.

By the use of timeout, a node within one layer may detect that a node on another layer is dead. Upon this detection, the alternative addresses for that level may be read from the message itself.

Generally, the normal flow is as follows:
- All the nodes are configured with the addresses of all their peers (e.g. the left N-N is configured with the address of the right N-N) and the address of the next layer in the direction from the endpoint to the user/service node. It is assumed that the next hop may later give a confirmation message on the redundant peers on that same layer back to the issuer of the message.
- On endpoint registration, all the nodes add relevant information in the message comprising information of all redundant peers. The endpoints register information of both originating and terminating sides. The redundancy information in the downward direction is a part of the registration.
- Typically during call set-up, the message will go from the originating endpoint towards the user/service node at the originating side to the user/service node at the terminating side and towards the terminating endpoint. At the terminating side, the *link index* is used as described below.

Typically, routing is used for address resolution between an N-N and another N-N or the U-N. Plain network calls will go between N-N only. User/service related calls will go between N-N to U-N on originating side and from U-N (originating) to U-N (terminating) to N-N (terminating).

The types of information that have to be addressed are such as:
- Addresses. Each node or the message itself has to contain data stating from which node a message was sent, and to which node the message is to be forwarded.
- Endpoint or endpoint-like data. The home environment, represented by a user/service node, has to receive endpoint and/or network adapter like information. NA like information might be access type information (e.g. H323Phone, H323Pc PstnUni, PstnNni, H320Uni, H320Nni, GsmUni, GsmNni, PbxUni), or similar SipPhone, SipPc etc. for SIP systems. Due to registration of endpoints towards a user/service node, the user/service node contains information describing the whole path from the endpoint towards the user/service node.

If the message itself is to contain address information, the following elements have to be added in the messages:
- Address pair list. Each node in the system adds its addresses to the address pair list. In fact, there might be several addresses for each node: The physical address of the node, the address of the voice channel, the media channel, etc. Besides, each layer is configured with at least physical address information of all its peers, hence all of these are added in the message when an endpoint registers towards the user/service node. The addresses of the peers might be set in a prioritised way.
- Link index. The link index identifies which node is currently being addressed in the address pair list. Messages might be issued either from the endpoints or the home environment, U-N. The link index only has to be used when messages are issued from the home environment (user/service node). Then the whole addressing path down to the endpoint should be included in the messages before the message traverse to the endpoint. On its way, only the link index is modified.

In the following, an exemplary embodiment of the present invention is described.

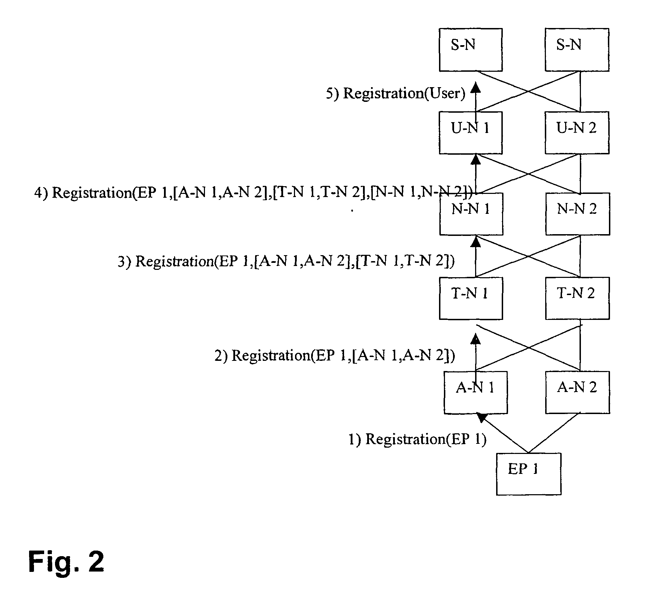

Fig. 2 shows the data relevant for redundancy, which data is exchanged during a normal user registration. Each node involved adds its own address as well as its peers' address to the address pair list. These data are stored for each user at the U-N. At the S-N layer, only user data and no address pair list data is stored. The figure illustrates the redundant peers at each layer, but in this example, all the primary nodes are functioning normally. The connections drawn without any arrow or message are other possible ways to route a message.

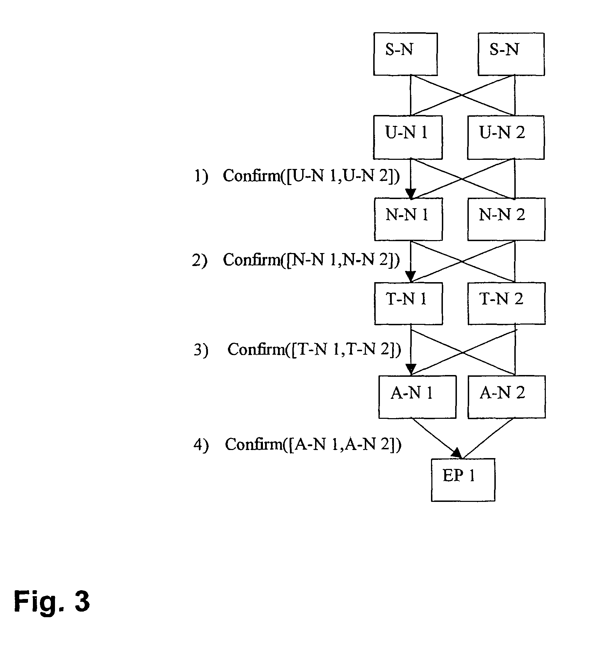

Fig. 3 shows the response given from the system on the registration previously discussed. The registration confirmation is initiated from the U-N layer. Every node may inform the underlying layer of its redundant peers. In this way, all nodes may be updated of the available nodes at the next upward layer. Also, the EP will have the possibility to contact two alternative addresses for future call set-ups.

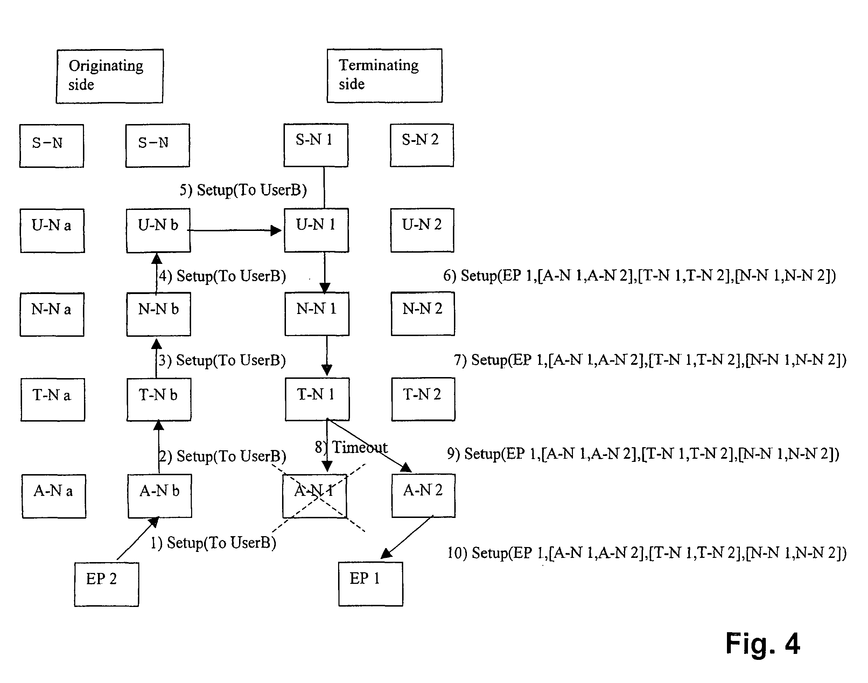

Fig. 4 shows an example of a call set-up in a network updated by way of the above described registration and confirmation. In this example, a user registered at U-N b, using the EP2, is making a call to a user (User B) registered with the EP 1 at U-N 1, the registration details for EP1 are as shown in fig. 2 and fig. 3. At the terminating side, A-N 1 is down. The T-N 1 may then, using the address pair list stored during registration of EP 1 and now received in the Set-up from N-N 1, reach EP 1 using the redundant node A-N 2. In this example, no communication with the S-N is shown, since it has no relevance with the redundancy on the A-N layer.

The main advantages of the present invention are short implementation time and little processing overhead during normal execution. In addition, few shared resources has to be maintained.

It should be noted that the example described above is simplified in order to emphasize the redundancy solution in the present invention. Another message flow will be accomplished in a real system. In fact, any system comprising a similar deployed system as described might utilize the present invention.

Moreover, the example is for illustrative purposes only, and is not restricting the present invention in any way. Other variations and substitutions may by utilized without departing from the scope of the invention.

## Claims

1. Method for providing high availability and redundancy in communication between an endpoint (EP 1) at a terminating side and an endpoint (EP 2) at an originating side in a packet switched network, said network being virtually divided into horizontal layers comprising a number of nodes, wherein a plurality of said nodes are associated with said terminating side and a plurality of said nodes are associated with said originating side, nodes within the same layer associated with the same side said to be peers and holding relevant information about each other, each node within each layer, in addition to the endpoints, being connected to at least all peers of adjacent layer(s) within the same side respectively,
**characterized in** the following steps, executed at each side respectively, prior to said communication:
• sending a first message vertically by the endpoint associated with the current side from one of said nodes within the horizontal layer adjacent to said endpoint to one of said nodes within a higher horizontal layer passing through one of said nodes within each intermediate layers,
• for each passed node, adding relevant information concerning current node and its peer(s) to said first message,
• upon receiving said first message, storing said relevant information for each passed node and its peers included in said first message in said node within the higher layer,
• in response to said first message, sending a second message in the opposite direction from said node within the higher layer to said endpoint passing through said nodes of said intermediate layers, said second message always containing the relevant information of the previously passed node and its peer(s), and
• in each node and in the endpoint, storing the relevant information of the previously passed node and its peer(s) when receiving said second message.

2. Method as defined in claim 1,
**characterized in that** the step of sending a first message by the endpoint relates to user registration, and the step of sending a second message from said node within the higher layer relates to confirmation thereto.

3. Method as defined in claim 1 or 2,
**characterized in that** said relevant information is one or more address(es), and said relevant information provided from said first message stored in the higher layer is an address list of the peers for each layer.

4. Method as defined in any of the preceding claims,
**characterized in that** said horizontal layers include an access layer comprising access nodes (A-N) handling access specific services, a network layer comprising network nodes (N-N) handling routing and network Qos (Quality of Service), a transit layer comprising transit nodes (T-N) for traversing firewalls, a user layer comprising user nodes (U-N) for handling user specific events as user registration, and a service layer comprising service nodes (S-N) for handling service specific events, said horizontal layers arranged in the above mentioned order.

5. Method as defined in claim 4,
**characterized in that** said access layer is the lowest one and adjacent to the endpoint, and said service layer is the highest one.

6. Method as defined in claim 4 or 5,
**characterized in that** said higher layer is the user layer.

7. Method as defined in any of the preceding claims,
**characterized in that** there are at least two peers per layer at each side.

8. Method as defined in the claims 3-7,
**characterized in that** more than one of said addresses may be associated with a single node.

9. Method as defined in any of the preceding claims,
**characterized in that** said originating side and said terminating side are connected to each other through a redundant coupling between the user nodes (U-N) and the network nodes (N-N) at each side.

10. Method as defined in claim 3-9,
**characterized in** utilizing the stored addresses of the peers of the next layer provided by said second message for routing packets or other messages involved in said communication from a current node in the vertical direction away from associated endpoint.

11. Method as defined in claim 3-10,
**characterized in** utilizing the address list stored in said higher layer for routing packets or other messages involved in said communication in the vertical direction towards associated endpoint by adding said address list to said packets or other messages when passing said higher layer and, thereby, finding a proper route to said endpoint.

12. Method as defined in claim 10 or 11,
**characterized in** if a node to which one of said packets or messages otherwise would have been routed is down, routing said packet or message to one of the peers of said node.

13. Method as defined in any of the preceding claims,
**characterized in that** said communication initiates some kind of service, e.g. a call and/or a call set-up.

## Patentansprüche

1. Verfahren zum Bereitstellen einer hohen Verfügbarkeit und Redundanz in einer Kommunikation zwischen einer Endstelle (EP 1) bei einer Terminierungsseite und einer Endstelle (EP 2) bei einer Ursprungsseite in einem paketvermittelten Netzwerk, wobei das Netzwerk virtuell in horizontale Schichten aufgeteilt wird, die eine Anzahl von Knoten umfassen, wobei eine Vielzahl der Knoten mit der Terminierungsseite verknüpft ist und eine Vielzahl der Knoten mit der Ursprungsseite verknüpft ist, wobei Knoten innerhalb derselben mit derselben Seite verknüpften Schicht Peers genannt werden und relevante Information übereinander halten, wobei jeder Knoten innerhalb einer jeweiligen Schicht zusätzlich zu den Endstellen mit wenigstens sämtlichen Peers der benachbarten Schicht(en) innerhalb der jeweiligen selben Seite verbunden ist,
**gekennzeichnet durch** die folgenden Schritte, die vor der Kommunikation jeweils auf jeder Seite ausgeführt werden:
• vertikales Senden einer ersten Nachricht **durch** die mit der aktuellen Seite verknüpfte Endstelle von einem der Knoten innerhalb der horizontalen Schicht, die zu der Endstelle benachbart ist, an einen der Knoten innerhalb einer höheren horizontalen Schicht, wobei einer der Knoten innerhalb von Zwischenschichten passiert wird,
• Hinzufügen, für jeden passierten Knoten, einer relevanten Information, die den aktuellen Knoten und seine(n) Peer(s) betrifft, an die erste Nachricht,
• Speichern, beim Empfangen der ersten Nachricht, der relevanten Information für jeden passierten Knoten und seine Peers, die in der ersten Nachricht enthalten sind, in dem Knoten innerhalb der höheren Schicht,
• Senden, in Ansprechen auf die erste Nachricht, einer zweiten Nachricht in die entgegengesetzte Richtung von dem Knoten innerhalb der höheren Schicht an die Endstelle mit Passieren **durch** die Knoten der Zwischenschichten, wobei die zweite Nachricht immer die relevante Information des zuvor passierten Knotens und seine(s/r) Peers enthält, und
• Speichern, in jedem Knoten und in der Endstelle, der relevanten Information des zuvor passierten Knotens und seine(s/r) Peers beim Empfangen der zweiten Nachricht.

2. Verfahren gemäß Anspruch 1, **dadurch gekennzeichnet, dass** der Schritt zum Senden einer ersten Nachricht durch die Endstelle eine Benutzerregistrierung betrifft und der Schritt zum Senden einer zweiten Nachricht von dem Knoten innerhalb der höheren Schicht die Bestätigung darauf betrifft.

3. Verfahren gemäß Anspruch 1 oder 2, **dadurch gekennzeichnet, dass** die relevante Information eine Adresse oder mehrere Adressen ist, und dass die relevante Information, die von der ersten Nachricht bereitgestellt ist, die in der höheren Schicht gespeichert ist, eine Adressliste der Peers für jede Schicht ist.

4. Verfahren gemäß einem der vorhergehenden Ansprüche, **dadurch gekennzeichnet, dass** die horizontalen Schichten eine Zugangsschicht, die zugangsspezifische Dienste handhabende Zugangsknoten (A-N) umfasst, eine Netzwerkschicht, die Routing- und Netzwerk-QoS (Quality of Service) handhabende Netzwerkknoten (N-N) umfasst, eine Transitschicht, die Transitknoten (T-N) zum Durchqueren von Firewalls umfasst, eine Benutzerschicht, die Benutzerknoten (U-N) zum Handhaben benutzerspezifischer Ereignisse als Benutzerregistrierung umfasst, und eine Dienstschicht enthalten, die Dienstknoten (S-N) zum Handhaben dienstspezifischer Ereignisse umfasst, wobei die horizontalen Schichten in der oben erwähnten Ordnung angeordnet sind.

5. Verfahren gemäß Anspruch 4, **dadurch gekennzeichnet, dass** die Zugangsschicht die Niedrigste und benachbart zu der Endstelle ist, und dass die Dienstschicht die Höchste ist.

6. Verfahren gemäß Anspruch 4 oder 5, **dadurch gekennzeichnet, dass** die höhere Schicht die Benutzerschicht ist.

7. Verfahren gemäß einem der vorhergehenden Ansprüche, **dadurch gekennzeichnet, dass** es wenigstens zwei Peers pro Schicht bei jeder Seite gibt.

8. Verfahren gemäß einem der Ansprüche 3-7, **dadurch gekennzeichnet, dass** mehr als eine der Adressen mit einem einzelnen Knoten verknüpft sein kann.

9. Verfahren gemäß einem der vorhergehenden Ansprüche, **dadurch gekennzeichnet, dass** die Ursprungsseite und die Terminierungsseite miteinander durch eine redundante Kopplung zwischen den Benutzerknoten (U-N) und den Netzwerkknoten (N-N) bei jeder Seite verbunden sind.

10. Verfahren gemäß einem der Ansprüche 3-9, **gekennzeichnet durch** ein Nutzen der gespeicherten Adressen der Peers der nächsten Schicht, bereitgestellt **durch** die zweite Nachricht, zum Routen von Paketen oder anderen Nachrichten, die in die Kommunikation involviert sind, von einem aktuellen Knoten in der vertikalen Richtung weg von der verknüpften Endstelle.

11. Verfahren gemäß einem der Ansprüche 3-10, **gekennzeichnet durch** ein Nutzen der in der höheren Schicht gespeicherten Adressliste zum Routen von Paketen oder anderen Nachrichten, die in die Kommunikation involviert sind, in die vertikale Richtung in Richtung der verknüpften Endstelle durch Hinzufügen der Adressliste zu den Paketen oder den anderen Nachrichten beim Passieren der höheren Schicht und **dadurch** Finden einer zweckmäßigen Route zu der Endstelle.

12. Verfahren gemäß Anspruch 10 oder 11, **gekennzeichnet durch** ein Routen, wenn ein Knoten, an den eines der Pakete oder der Nachrichten anderenfalls geroutet worden wäre, abgeschaltet ist, des Paketes oder der Nachricht an einen der Peers der Knotens.

13. Verfahren gemäß einem der vorhergehenden Ansprüche, **dadurch gekennzeichnet, dass** die Kommunikation eine gewisse Art eines Dienstes initiiert, zum Beispiel einen Anruf und/oder einen Rufaufbau.

## Revendications

1. Procédé fournissant haute disponibilité et redondance dans la communication entre un point d'extrémité (EP 1) d'un côté de destination et un point d'extrémité (EP 2) d'un côté d'origine, dans un réseau à commutation de paquets, ledit réseau étant virtuellement divisé en couches horizontales comprenant un certain nombre de noeuds, une pluralité desdits noeuds étant associée audit côté de destination et une pluralité desdits noeuds étant associée audit côté d'origine, les noeuds dans la même couche, associée au même côté, étant appelés pairs et stockant les uns sur les autres des informations pertinentes, chacun des noeuds dans chacune des couches, en plus des points d'extrémité, étant connecté à au moins tous les pairs d'une ou plusieurs couches adjacentes du même côté, respectivement,
**caractérisé par** les étapes suivantes, exécutées sur chacun des côtés, respectivement, avant ladite communication, consistant à :
• émettre verticalement un premier message par le point d'extrémité associé avec le côté courant, entre un desdits noeuds dans la couche horizontale adjacente audit point d'extrémité et l'un desdits noeuds dans une couche horizontale supérieure, en passant par un desdits noeuds dans chacune des couches intermédiaires,
• à chaque noeud traversé, ajouter audit premier message des informations pertinentes concernant le noeud courant et son ou ses pairs,
• à réception dudit premier message, mémoriser dans ledit noeud, dans la couche supérieure, lesdites informations pertinentes sur chaque noeud traversé et ses pairs, incluses dans ledit premier message,
• en réponse audit premier message, envoyer un second message dans la direction opposée, entre ledit noeud dans la couche supérieure et ledit point d'extrémité, en traversant lesdits noeuds dans lesdites couches intermédiaires, ledit second message contenant toujours les informations pertinentes sur le noeud antérieurement traversé et son ou ses pairs, et
• dans chaque noeud et dans le point d'extrémité, mémoriser les informations pertinentes sur le noeud traversé antérieurement et son ou ses pairs à la réception dudit second message.

2. Procédé selon la revendication 1, **caractérisé en ce que** l'étape d'envoi d'un premier message par le point d'extrémité concerne l'enregistrement d'un utilisateur, et **en ce que** l'étape d'envoi d'un second message à partir dudit noeud dans la couche supérieure concerne la confirmation de celui-ci.

3. Procédé selon la revendication 1 ou 2, **caractérisé en ce que** lesdites informations pertinentes sont une ou plusieurs adresses, et **en ce que** lesdites informations pertinentes fournies à partir dudit premier message, stockées dans la couche supérieure, sont une liste d'adresses des pairs de chaque couche.

4. Procédé selon l'une quelconque des revendications précédentes, **caractérisé en ce que** lesdites couches horizontales comprennent une couche d'accès comprenant des noeuds d'accès (A-N) gérant des services spécifiques à l'accès, une couche de réseau comprenant des noeuds de réseau (N-N) gérant le routage et la qualité de service du réseau, une couche de transit comprenant des noeuds de transit (T-N) afin de traverser les coupe-feu, une couche utilisateur comprenant des noeuds utilisateur (U-N) pour gérer des événements spécifiques à l'utilisateur tels que l'enregistrement de l'utilisateur, et une couche de service comprenant des noeuds de service (S-N) pour gérer des événements spécifiques au service, lesdites couches horizontales étant disposées dans l'ordre mentionné ci-dessus.

5. Procédé selon la revendication 4, **caractérisé en ce que** ladite couche d'accès est la plus basse, voisine du point d'extrémité, et **en ce que** ladite couche de service est la plus élevée.

6. Procédé selon la revendication 4 ou 5, **caractérisé en ce que** ladite couche supérieure est la couche utilisateur.

7. Procédé selon l'une quelconque des revendications précédentes, **caractérisé en ce qu'**il existe au moins deux pairs par couche de chaque côté.

8. Procédé selon les revendications 3 à 7, **caractérisé en ce qu'**il est possible d'associer plus d'une desdites adresses avec un noeud unique.

9. Procédé selon l'une quelconque des revendications précédentes, **caractérisé en ce que** ledit côté d'origine et ledit côté de destination sont connectés ensemble par un couplage redondant entre les noeuds utilisateur (U-N) et les noeuds de réseau (N-N) de chaque côté.

10. Procédé selon les revendications 3 à 9, **caractérisé par** l'utilisation des adresses mémorisées des pairs de la couche suivante fournies par ledit second message pour le routage de paquets ou d'autres messages intervenant dans ladite communication provenant d'un noeud courant dans la direction verticale, en s'éloignant du point d'extrémité associé.

11. Procédé selon les revendications 3 à 10, **caractérisé par** l'utilisation de la liste d'adresses mémorisée dans ladite couche supérieure pour router des paquets ou d'autres messages intervenant dans ladite communication dans la direction verticale vers un point d'extrémité associé en ajoutant ladite liste d'adresses auxdits paquets ou autres messages lorsqu'ils traversent ladite couche supérieure et, de cette manière, pour trouver une route adéquate vers ledit point d'extrémité.

12. Procédé selon la revendication 10 ou 11, **caractérisé**, si un noeud vers lequel un desdits paquets ou messages aurait sinon été routé est indisponible, par le routage dudit paquet ou message vers l'un des pairs dudit noeud.

13. Procédé selon l'une quelconque des revendications précédentes, **caractérisé en ce que** ladite communication lance un certain type de service, par exemple un appel et/ou l'établissement d'un appel.
